# EUROPEAN PATENT SPECIFICATION

(11) **EP 3 064 721 B1**
(45) Date of publication and mention of the grant of the patent: **12.08.2020**
(21) Application number: 16158151.7
(22) Date of filing: 01.03.2016
(51) Int. Cl.: F01D 25/16

(54) **EXHAUST GAS TURBOCHARGER COMPRISING AN ANISOTROPIC BEARING ARRANGEMENT**
ABGASTURBOLADER MIT EINER ANISOTROPEN LAGERVORRICHTUNG
TURBOCOMPRESSEUR À GAZ D'ÉCHAPPEMENT COMPRENANT UN ENSEMBLE PALIER ANISOTROPE

(30) Priority: 03.03.2015 DE 102015203785
(43) Date of publication of application: 07.09.2016
(73) Proprietor: BorgWarner Inc., Auburn Hills, MI 48326 (US)
(72) Inventor: NAWRATH, Ivo, 55116 Mainz (DE)
(74) Representative: Peterreins Schley

(56) References cited:
- EP-A1- 2 693 017
- WO-A1-2014/097417
- DE-A1- 3 936 069
- DE-A1-102012 208 960
- JP-A- S58 142 014
- JP-A- 2002 213 450
- JP-A- 2008 111 502
- US-A- 4 427 309
- US-A1- 2009 148 084

## Description

The invention relates to an exhaust gas turbocharger according to the preamble to Claim 1.

A generic exhaust gas turbocharger has a compressor housing, in which a compressor wheel is arranged and is fixed on one end of a shaft.

Further, the exhaust gas turbocharger has a turbine housing, in which a turbine wheel is arranged and is arranged on a second, diametrically opposite end of the shaft.

A bearing housing is arranged between the compressor housing and the turbine housing, and is connected to the compressor housing and to the turbine housing, and has a bearing arrangement for the shaft of the exhaust gas turbocharger.
EP 2 693 017 A1 describes a turbocharger having a floating bush with which noise can be reduced, and the rotation speed can be increased. A rotating shaft has a circular cross-section and connects a turbine rotor and a compressor rotor. The shaft is supported in a freely rotatable manner at two axially separated positions via floating bushes. An inner circumferential surface of each of the floating bushes has a non-circular shape in which the curvature of the cross-sectional shape varies in the circumferential direction. Further turbochargers and respective bearing bushes are disclosed in JP S58 142014 A and WO 2014/097417 A1.

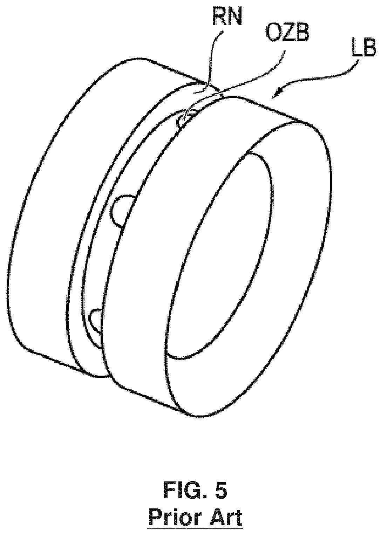

Figure 5 shows a known embodiment of a bearing bush in a bearing arrangement of this type, which bearing bush is provided with an annular groove RN which is also designated as an oil distribution groove. This annular groove of a known turbocharger radial bearing is arranged, in the exemplary case depicted, on the outer circumference or on the outer contour of the bearing bush LB. Oil supply holes are arranged in the annular groove, one of which is characterized with the reference OZB as representative for all oil supply holes.

In this known bearing arrangement, acoustic and rotor-dynamic problems can arise during operation of the exhaust gas turbocharger.

It is therefore the object of the present invention to create an exhaust gas turbocharger of the type specified in the preamble to Claim 1 which enables an improvement of the acoustic and rotor-dynamic behavior of the rotor.

The solution to this problem is carried out by the features of Claim 1.

Accordingly, the exhaust gas turbocharger according to the invention has a bearing arrangement which is designed as an anisotropic radial plain bearing. "Anisotropic radial plain bearing" is understood according to the invention and corresponding to the definition of "anisotropy" as a plain bearing having directionally dependent characteristics or behavior.

Accordingly, the plain bearing arrangement of the exhaust gas turbocharger according to the invention may present the anisotropy on the bearing side, in particular with respect to the design of the bearing bushes thereof; however, it may also present the anisotropy on the shaft side or the housing side.

The subclaims have advantageous refinements of the invention as their subject matter.

It is thus possible, according to the principles of the present invention, to design at least one of the two conventionally provided bearing bushes as anisotropic.

It is hereby possible to provide a bearing bush with a non-uniformly designed annular groove which is in flow connection with the oil supply holes.

It is alternatively possible to provide the bearing bush with an annular groove arranged eccentric to the center point of the bearing bush recess, which is in turn in flow connection with the oil supply holes. An annular groove of this type may be arranged on the outer circumference and may have a round contour with an eccentric placement in comparison to the bearing bush, or may also have any other contour in case differing functional depths are provided across the circumference.

It is further possible to realize a variation in width of the annular groove across the circumference.

An another alternative, it may be provided that the annular groove has specific contours influencing the flow, which contours additionally enable rotor-dynamic optimization of the bush rotational speed and the through flow or oil movement.

Preferentially, potential imbalances arising in this case are compensated for or prevented by design measures.

This principle according to the invention may be applied to so-called "semi-floating and full-floating bearings" in inner and outer bearing surfaces (shaft/bearing and/or bearing/housing). Further, this principle may be combined with additional design aspects of a plain bearing related to the shaft, the bearing, and/or the bearing housing. The effects and the number of supply holes in the bearing bush or in the annular groove thereof are hereby insignificant. If the previously described, generally possible embodiments are used to achieve an anisotropy of the plain bearing of the exhaust gas turbocharger according to the invention in the area of the bearing housing, then aspects of imbalance do not play a role.

During operation of an exhaust gas turbocharger of this type designed according to the invention, the described system presents an anisotropy (with respect to damping characteristics and oil movement) for the rotor-dynamic effects of the plain bearing and thus positive effects arise with respect to the rotor dynamics and also the acoustics (specifically with relation to subsynchronous movement mechanisms and synchronization with the oil film).

Furthermore, an additional asymmetry may be achieved, which reduces the described synchronization effects, through different embodiments of the described bearing points of the system of the exhaust gas turbocharger according to the invention.

Additional details, features, and advantages of the invention arise from the subsequent description of an embodiment with reference to the drawings:
Figure 1 shows a cross-sectional view of an embodiment of an exhaust gas turbocharger according to the invention,
Figure 2 shows a schematically highly-simplified representation of a plain bearing according to the invention,
Figure 3 shows a representation corresponding to Figure 2 of a second embodiment of a plain bearing according to the invention
Figure 4 shows a representation corresponding to Figure 2 of another embodiment of the plain bearing according to the invention, and
Figure 5 shows a schematically simplified perspective representation of a plain bearing according to the prior art.

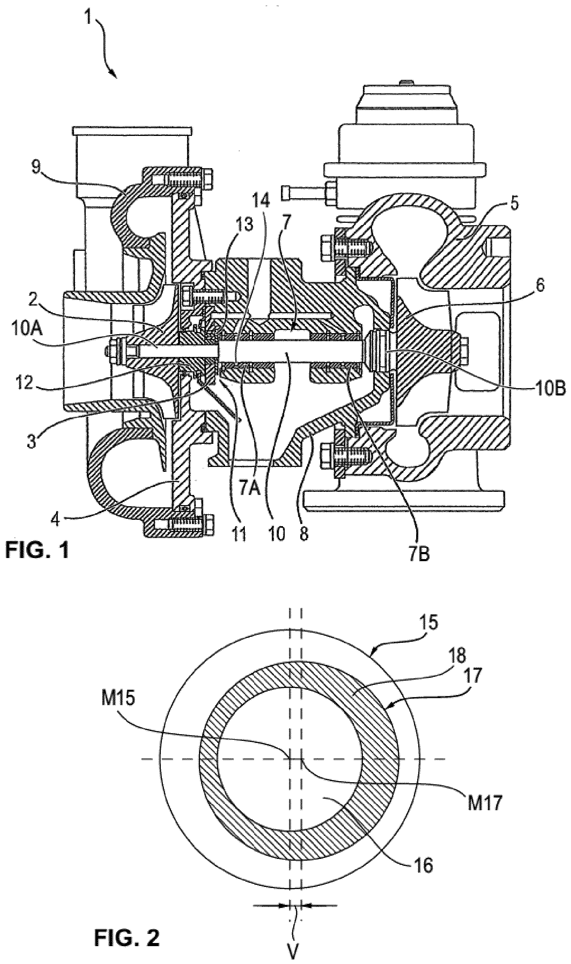

Figure 1 shows a schematically slightly simplified representation of an exhaust gas turbocharger 1. Exhaust gas turbocharger 1 comprises a turbine housing 5 and a compressor housing 9. Turbine housing 5 and compressor housing 9 are connected to each other via a bearing housing 8. A compressor rear wall 4 forms the turbine-side connection of compressor housing 9. A compressor wheel 2 is located in compressor housing 9. A turbine wheel 6 is arranged in turbine housing 5. Compressor wheel 2 is arranged rotationally fixed on one end 10A of a shaft 10 and turbine wheel 6 is arranged rotatably fixed on an end 10B of shaft 10. Shaft 10 is mounted radially in a bearing housing 8 via a bearing arrangement 7, which has in the exemplary case bearing bushes 7A and 7B arranged spaced apart from each other. An axial bearing arrangement 11 is provided in bearing housing 8 for axial mounting of shaft 10. Turbine wheel 6 is set into rotation via an exhaust gas flow of an internal combustion engine. Compressor wheel 2 is thus likewise set into rotation via shaft 10. By means of the compressor wheel, the charge air of an internal combustion engine may be charged.

Bearing arrangement 7 of exhaust gas turbocharger 1 according to the invention is designed as an anisotropic radial plain bearing. As explained at the beginning, the anisotropy of this radial plain bearing may be achieved on the part of the bearing, on the part of the shaft, and/or on the part of bearing housing 8. For example, the achievement of an anisotropy will be subsequently explained on the basis of different embodiments of bearing bushes of the radial plain bearing 7. To simplify the representation, the oil supply holes are not depicted in each of the bearing bushes in Figures 2 to 4. An oil supply hole, identified with reference OZB in Figure 1 is, however, representative for oil supply holes of this type, which may also be provided in the embodiments of the bearing bushes according to Figures 2 to 4, wherein one or a plurality of oil supply holes of this type is possible. For this purpose, reference may also be made to the depiction of Figure 5, to the reference OZB therein.

Figure 2 shows an embodiment of a bearing bush 15 with a center recess 16 and a center point M15, which bearing bush 15 is provided with an annular groove 17, which groove is arrange eccentrically offset to bearing bush 15 by an offset V, so that a center point M17 arises for annular groove 17. The resulting shaded area 18 illustrates the contour of annular groove 17.

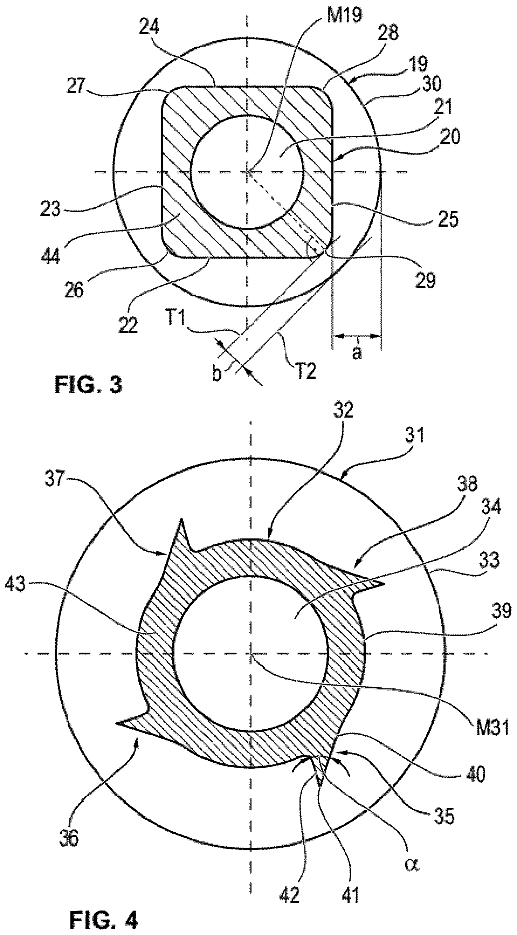

Figure 3 illustrates a non-uniformly designed bearing bush 19 with a bush center point M19, a center recess 21, and an annular groove 20, and has a substantially rectangular outer edge with outer edge sections 22 to 25 designed as straight lines, which are respectively connected by rounded corner regions 26 to 29. Outer edge section 25 occupies a distance a to the circular outer circumference 30 of bearing bush 19. The number of the different insertion depths may be varied according to demand. As an example for this, a three-fold repetition of the insertion depth would be invoked across the circumference.

A tangent T1 at corner region 29 occupies a distance b to a tangent T2 which is offset parallel to T1 at the outer circumference 30 of bearing bush 19, which distance b is smaller than distance a. As a special variant, distance b may be hereby reduced to 0 so that only pockets are generated for the system on the circumference, which pockets have an insertion depth of measurement a.

Figure 4 depicts a third embodiment of a bearing bush 31 according to the invention, which has a circular outer circumference 33, a circular center recess 34, and a center point M31.

Bearing bush 31 is further provided with an annular groove 32 which is provided with at least one channel, in the example, however, with four channels 35, 36, 37, and 38, which provide the specific influences on the flow.

Channels 35 to 38 are each designed identically so that the structure thereof will be subsequently explained on the basis of channel 35. The channel is designed as an acute angle and is formed by a tangent 40 to outer circumference 39 starting from an outer circumferential line 39 of groove 32, which ends in a point 41. A return line 42 leads from point 41 back to outer circumference 39 wherein return line 42 adopts an acute angle α to tangent 40. The resulting contour of annular groove 32 is reproduced in shading and identified by reference numeral 43, wherein the contour of the annular groove in Figure 3 is designated by reference numeral 44.

As was explained at the beginning, the anisotropic design of the radial plain bearing according to the invention may also be carried out by corresponding modification to shaft 10 and/or to the inner contour of bearing housing 8 which is arranged adjacent to plain bearing 7. Accordingly, this inner contour of bearing housing 8 or the outer contour of shaft 10 may be carried out, corresponding to the depiction of Figures 2 to 4, on the outer contour in the case of shaft 10, and on the inner contour in the case of bearing housing 8, so that reference may be made to the depiction and the explanation of Figures 2 to 4 with respect to this.

In addition to the preceding written description of the invention, reference is hereby made explicitly to the graphic representation of the invention in Figures 1 to 4 as a supplemental disclosure thereto.

### List of reference numerals:

- 1: Exhaust gas turbocharger
- 2: Compressor wheel
- 3: Axial bearing
- 4: Compressor rear wall
- 5: Turbine housing
- 6: Turbine wheel
- 7: Bearing arrangement
- 7A, 7B: Bearing bushes
- 8: Bearing housing
- 9: Compressor housing
- 10: Shaft
- 10A: First end
- 10B: Second end
- 11: Axial bearing arrangement
- 12: Sealing bush
- 13: Bearing collar
- 14: Oil supply hole
- 15: Anisotropic radial plain bearing bush
- 16: Center recess
- 17: Annular groove
- 18: Contour of the annular groove
- 19: Bearing bush
- 20: Annular groove
- 21: Center recess
- 22-25: Outer edge sections
- 26-29: Corner regions
- 30: Outer circumference
- 31: Bearing bush
- 32: Annular groove
- 33: Outer circumference
- 34: Center recess
- 35-38: Channels
- 39: Outer circumference line
- 40: Tangent
- 41: Point
- 42: Return line
- 43, 44: Annular contour
- T1, T2: Tangent lines
- V: Offset
- a, b: Distance measurements
- α: Angle
- M15, M17, M19, M31: Center points

## Claims

1. An exhaust gas turbocharger (1)
- comprising a compressor housing (9) in which a compressor wheel (2) is arranged on a first end (10A) of a shaft (10),
- comprising a turbine housing (5) in which a turbine wheel (6) is arranged on a second end (10B) of the shaft (10), and
- comprising a bearing housing (8) which is arranged between the compressor housing (9) and the turbine housing (5), is connected to the same, and has a bearing arrangement (7) for the shaft (10),
wherein- the bearing arrangement (7) is designed as an anisotropic radial plain bearing arrangement,
**characterized in that** the plain bearing arrangement has at least one anisotropically designed bearing bush (15; 19; 31),
wherein the bearing bush (19; 31) has a non-uniformly designed annular groove (20; 32), or
wherein the bearing bush (15) has an annular groove (17) which is arranged eccentric to the center point (M15) of the bearing bush (15) by an offset (V).

2. The exhaust gas turbocharger according to Claim 1, **characterized in that** the annular groove (32) has at least one acutely angled channel (35-38).

3. The exhaust gas turbocharger according to Claim 2, **characterized in that** four channels (35-38) are provided which are at the same angular distance from each other.

4. The exhaust gas turbocharger according to Claim 2 or 3, **characterized in that** the channel or the channels (35-38) is or are each formed from a tangent (40) to an outer circumference (39) of the annular groove (32) and a return line (42) at the outer circumference (39), wherein the return lines (42) to the tangent (40) adopt an acute angle (α).

5. The exhaust gas turbocharger according to Claim 1, **characterized in that** the annular groove has a variation in width across the circumference.

## Patentansprüche

1. Abgasturbolader (1),
- ein Verdichtergehäuse (9) umfassend, in dem ein Verdichterrad (2) an einem ersten Ende (10A) einer Welle (10) angeordnet ist,
- ein Turbinengehäuse (5) umfassend, in dem ein Turbinenrad (6) an einem zweiten Ende (10B) der Welle (10) angeordnet ist, und
- ein Lagergehäuse (8) umfassend, welches zwischen dem Verdichtergehäuse (9) und dem Turbinengehäuse (5) angeordnet ist, mit diesen verbunden ist und eine Lageranordnung (7) für die Welle (10) aufweist,
wobei die Lageranordnung (7) als anisotrope radiale Gleitlageranordnung ausgestaltet ist,
**dadurch gekennzeichnet, dass** die Gleitlageranordnung zumindest eine anisotrop ausgestaltete Lagerbuchse (15; 19; 31) aufweist,
wobei die Lagerbuchse (19; 31) eine ungleichförmig ausgestaltete Ringnut (20; 32) aufweist, oder
wobei die Lagerbuchse (15) eine Ringnut (17) aufweist, die vom Mittelpunkt (M15) der Lagerbuchse (15) um einen Versatz (V) außermittig angeordnet ist.

2. Abgasturbolader nach Anspruch 1, **dadurch gekennzeichnet, dass** die Ringnut (32) zumindest einen spitzwinkligen Kanal (35-38) aufweist.

3. Abgasturbolader nach Anspruch 2, **dadurch gekennzeichnet, dass** vier Kanäle (35-38) vorgesehen sind, die denselben Winkelabstand zueinander aufweisen.

4. Abgasturbolader nach Anspruch 2 oder 3, **dadurch gekennzeichnet, dass** der Kanal oder die Kanäle (35-38) jeweils aus einer Tangente (40) zum Außenumfang (39) der Ringnut (32) und einer Rücklauflinie (42) am Außenumfang (39) ausgebildet ist oder sind, wobei die Rücklauflinien (42) zur Tangente (40) einen spitzen Winkel (a) einnehmen.

5. Abgasturbolader nach Anspruch 1, **dadurch gekennzeichnet, dass** die Ringnut über den Umfang eine Variation in der Breite aufweist.

## Revendications

1. Turbocompresseur à gaz d'échappement (1)
- comprenant un boîtier de compresseur (9) dans lequel une roue de compresseur (2) est agencée sur une première extrémité (10A) d'un arbre (10),
- comprenant un boîtier de turbine (5) dans lequel une roue de turbine (6) est agencée sur une deuxième extrémité (10B) de l'arbre (10), et
- comprenant un boîtier de palier (8) agencé entre le boîtier de compresseur (9) et le boîtier de turbine (5), connecté à celui-ci, et ayant un agencement de palier (7) pour l'arbre (10),
l'agencement de palier (7) étant conçu en tant qu'agencement de palier lisse radial anisotrope,
**caractérisé en ce que** l'agencement de palier lisse présente au moins un coussinet de palier conçu sous forme anisotrope (15 ; 19 ; 31),
le coussinet de palier (19 ; 31) présentant une rainure annulaire conçue sous forme non uniforme (20 ; 32), ou
le coussinet de palier (15) présentant une rainure annulaire (17) agencée excentriquement du point central (M15) du coussinet de palier (15) par un décalage (V).

2. Turbocompresseur à gaz d'échappement selon la revendication 1, **caractérisé en ce que** la rainure annulaire (32) présente au moins un canal à angle aigu (35-38).

3. Turbocompresseur à gaz d'échappement selon la revendication 2, **caractérisé en ce que** quatre canaux (35-38) sont prévus, étant à la même distance angulaire les uns des autres.

4. Turbocompresseur à gaz d'échappement selon la revendication 2 ou 3, **caractérisé en ce que** le canal ou les canaux (35-38) est ou sont chacun formés à partir d'une tangente (40) jusqu'à une circonférence externe (39) de la rainure annulaire (32) et d'une ligne de retour (42) au niveau de la circonférence externe (39), les lignes de retour (42) jusqu'à la tangente (40) adoptant un angle aigu (a).

5. Turbocompresseur à gaz d'échappement selon la revendication 1, **caractérisé en ce que** la rainure annulaire présente une variation de largeur sur la circonférence.
